Europäisches Patentamt

(19) European Patent Office

Office européen des brevets

(11) Publication number: 0 193 077
A1

# (12) EUROPEAN PATENT APPLICATION

(21) Application number: 86102038.6

(22) Date of filing: 18.02.86

(51) Int. Cl.⁴: F 16 L 55/04

(30) Priority: 25.02.85 US 705082

(43) Date of publication of application:
03.09.86 Bulletin 86/36

(84) Designated Contracting States:
DE FR GB

(71) Applicant: SURGEACO, INC.
4101 West, 123rd Street
Alsip Illinois 60658(US)

(72) Inventor: DeMent, Robert Bruce, Jr.
9111 South Central Avenue
Oak Lawn Illinois 60453(US)

(72) Inventor: Ayres, Walter D., Jr.
4350 West Ford City Drive
Chicago Illinois 60652(US)

(74) Representative: Goddar, Heinz J., Dr. et al,
FORRESTER & BOEHMERT Widenmayerstrasse 4/I
D-8000 München 22(DE)

(54) Non-pressurized surge arrestor for use in pipeline systems for dissipating the harmful effects of pressure surges and shock waves.

(57) A surge arrestor is disclosed for dissipating the harmful and dangerous energies associated with pressure surges and shocks in hydraulic systems. The surge arrestor of the invention is made from synthetic elastomers within the durometer hardness range of 50A Shore to 95A Shore.

The use of these synthetic elastomers allows for a tubular element (12) of such material to be employed for arresting pressure surges and shocks in piping systems without the need of pressurized gases on the outer surface area of the tubular element (12). The tubular surge arrestors (10) of the present invention are exposed, on their outer surface areas, only to non-pressurized air. In the preferred embodiment of the invention, the surge arrestor (10) is provided with open ends (12' 12") and is mounted in-line in the piping system.

In another embodiment the surge arrestor (10', 10") is provided with only one open end (50"), so that the surge arrestor is mountable to a piping system off-line.

In this embodiment, the surge arrestor (10', 10") serves as a pressure surge accumulator. This accumulator may also be provided with an automatic sealing valve stem (80) for closing off most of the flow of the flowing medium into the tubular element (70) after the element has expanded to a predetermined size, above which, breakage may occur.

Fig. 3

NON-PRESSURIZED SURGE ARRESTOR FOR USE
IN PIPELINE SYSTEMS FOR DISSIPATING THE HARMFUL EFFECTS
OF PRESSURE SURGES AND SHOCK WAVES

The present invention is directed to a device for absorbing
the excessive pressure build-up and shock waves produced
in piping systems. Pressure surges, overpressures,
and pulsations, commonly termed "water hammer," occur
in piping systems when the fluid being pumped is suddenly
restricted in further movement, or has its direction
reversed or changed, or when a pump of the system is
suddenly stopped, or when a check valve in the system
suddenly closes. All pipelines in which fluids flow
experience such pressure surges and shock waves at one
time or another. Some of these shock waves and pressure
surges can be harmful, especially over a long span of
time where individual pressure surges and shocks act
over time to weaken the structural integrity of the piping
system with the eventual breakdown of the system. In the
case of a severe shock wave or pressure surge in a piping
system not previously designed to withstand and absorb
such a severe wave, breakdown can occur from one such severe
shock or severe pressure surge. Conventional devices used
today to absorb or lessen the force of such pressure surges
and shock waves usually are of the accumulator type, where
a volume is filled with pressurized gas, which gas acts on

426

- 2 -

0193077

a flexible bladder, such as rubber, so that when the accumulator is connected to the flow of medium through the piping system, the shocks and pressure surges are partially dissipated by the overpressures impinging upon the biased bladder. There are many variations on these accumulator-type absorbers, but all use a pressurized gas to absorb the dangerous kinetic energy of the flowing medium. However, since these accumulators are mounted at right angles to the flow of the medium in the system, only some, not all, of the pressure surges and shock waves ever impinge upon the bladder of the accumulator, regardless of how many of these accumulators are installed in the piping system. To effectively control all pressure surges and shock waves with these conventional accumulators would require more accumulators in the system than usually economically warranted or practicable. Even then, not all of these overpressures and shocks can be dissipated. Further, the typical right-angle mounting of these accumulators causes pressure surges in and of itself due to the sudden change of direction of the flow of the flowing medium, so that part of the useful effects of these conventional accumulators serve only to cancel the damage their existence in the piping system has caused.

Another type of surge absorber or arrestor is a piston-type absorber, where a flexible-walled cartridge, surrounded by an envelope, is gas-pressurized to absorb the shock. As the cartridge is forced inwardly by a pressure surge, it is forced to compress and to absorb the pressure surge. These are also mounted off-line, that is, at right angles to the flow of the flowing
medium in the pipes. Since pressurized gas is also
used in this, it is not quick to respond to sudden
changes in the system. It is also expensive and is
not capable of absorbing severe shocks or pressure
surges without a prohibitive amount of such piston-
type absorbers being mounted along the piping system.

While mostly all conventional pressure surge
arrestors in use today are mounted off-line to the
piping system, that is at right angles to the portions
of the pipes of the system to which they are connected,
there does exist one such conventional device that is
mounted in-line, so that the direction of the flow of
the flowing medium in the system is the same as that
through the arrestor. Such in-line arrestors are
connected between two pipes so that the medium flows
through the pipes and entirely through the arrestor
in the same axial direction with none or very little
change of flow-direction. However, such in-line
pressure surge arrestors, or de-surgers as they are
commonly known, also use pressurized gas to absorb
the kinetic energies of the pressure shocks and surges.
In this case, the flowing medium flows inside a hollow
metallic mandrel provided wiht a series of circumferential
throttling orifices through which the flowing media pass.
Mounted concentric about the mandrel is a flexible
rubber sleeve upon which the jets of flowing media
from the orifices impinge. The flexible rubber sleeve
is in contact with pressurized gas contained within a
precharged gas chamber formed by the housing of the device. The flexible rubber sleeve serves to provide a barrier between the flowing medium and the pressurized gas, so that the pressurized gas may take up the excessive energy of the pressure surge.

However, such device is limited in application, since it must be ensured that the orifices do not become clogged, which is difficult to prevent, even in those cases where only pure water is the flowing medium. In the case of flowing slurry, for example, it is impossible to use this device. Further, the fact that the absorbing function is, again, performed by pressurized gas, such shock absorbing qualities of the device is limited, slow, and, at times, prohibitively expensive for employment in a piping system.

It is, therefore, the primary object of the present invention to provide a surge arrestor that obviates the need of using pressurized gas acting upon a servile member therefore, for taking up excessive kinetic energies of shock waves and pressure surges of a piping system.

It is also an object of the present invention to allow for enhanced energy-absorption of the shock and pressure waves of the piping system, that also reacts more quickly to such shock and pressure waves. In one embodiment of the invention, such reaction time is approximately instantaneous and continuous.

It is another object of the present invention to allow for a series of the surge arrestors to be mounted in a piping system at strategic locations thereof, such that it is not economically unfeasible to do so, since the cost of a surge arrestor of the present invention is drastically lower than that for those currently used and sold.

It is still another object of the present invention to allow for easy and relatively simple mounting of the surge arrestor in all piping systems, without the difficult, time-consuming, and tedious task of providing a pressurized gas, as is necessary with currently-used and currently-employed arrestors and accumulators.

It is yet another object of the present invention to provide a surge arrestor that is substantially maintenance-free, and which, with the proper additives provided depending upon the environment in which it is to be used, can provide trouble-free service for outlasting that for the currently-used arrestors and accumulators.

Toward these above ends, as well as others, the surge arrestor of the present invention is a tubular element made of synthetic elastomeric material chosen from the group consisting of: polyurethane, ethylene-propylene-diene polymer, ethylene/acrylic elastomer, carboxylated nitrile, and chlorosulfonated polyethylene, each within the durometer hardness range of 50A Shore to 95A Shore, inclusive, and polyester elastomer, in the durometer hardness range of 70A Shore to 95A Shore.

Each of the above-named elements within the hardness range above-named provides a material that is flexible with the following properties: High tensile strength; high tensile modulus in lower extension percentages; high ultimate elongation; low tensile set; long flexural life; high dampening through hysterisis loss; consistancy of physical properties over a wide temperature range and environmental conditions; high temperature resistance; low temperature resistance; high chemical resistance; and high abrasion resistance. These properties allow for the complete elimination of pressurized gas, which has hitherto been requisite for absorbing the dangerous energies of shock and pressure waves.

In the preferred embodiment of the invention, the surge arrestor, made from one or a combination of the above-named elastomeric materials within the hardness range above-given, is formed into a hollow tubular form with an open inlet and open outlet at the two ends thereof, so that the surge arrestor is mounted in-line in the piping system in which it is to be used. The flowing medium of the system flows longitudinally axially through the arrestor in the same direction as it flows through the portions of the piping system to which the surge arrestor is attached.

The elastomeric tube is connected between ends of adjacent pipes of the system via a housing made of a pair of flange-reducers, which define an annular region between the outer surface area of the tube and the inner surface area of the flange-reducers, which annular region relatively non-elastic material and having
means for mounting said second end of said
valve stem therein, said second closed end
of said elastomeric element (50) moving toward
or away from said one open end of said element
(50) when said element is full with flowing
medium or empty of it, respectively, so that
the inflow into said element may be stopped
upon reaching a predetermined expansion thereof.

14. The surge arrestor according to Claim 13,
characterised in that said means for fixedly
mounting comprises a flange means fixable to
a portion of the piping system to which said
element (50) is to be attached; and means for
fixedly mounting further comprising means for
attaching said flange means to said element
(50) adjacent said one open end thereof;

said flange means having a valve seat for mating
relationship with said first end of said valve
stem, and a bore in said valve seat for providing
fluid communication between said one open end of
said element and the interior of the piping system.

15. The surge arrestor according to Claim 14,
characterised in that said element (50) further
comprises an annular ring adjacent said one open
end thereof, said annular ring being mountable
between said flange means and said means for
attaching said flange means to provide a gasket
therefor.

16. A method of arresting pressure surges in piping systems, pumping systems, hydraulic systems, and the like, characterised by:

    choosing an elastomeric material for a tubular element having a hollow interior that has a durometer reading of between 50A Shore and 95A Shore;

    inserting the elastomeric tubular element having a hollow interior in a piping system through which a medium may flow from the conduits of the piping system, and the like, so that at least a portion of the medium flowing in the system also flows in the tubular element; and mounting the tubular element to the system so that the outer circumferential surface of the tubular element is exposed to non-pressurized air.

17. The method according to Claim 16 characterised in that said step of choosing comprises selecting a material taken from the group: polyurethane, ethylene-propylene-diene polymer, ethylene/acrylic elastomer, carboxylated nitrile, and chlorosulfonated polyethylene.

18. The method according to Claim 16, characterised in that said step of inserting comprises emplacing the tubular element in-line in the system so that the flow of medium flows entirely through the tubular element in the same general direction as it flows through the system elements to which the tubular element is connected.

19. A method of using synthetic elastomers of polyurethane, ethylene-propylene-diene polymer,
ethylene/acrylic elastomer, carboxylated
nitrile, and chlorosulfonated polyethylene,
in the durometer range of 50A Shore to 95A
Shore, characterised by

inserting a tubular form of at least one of
the synthetic elastomeric materials taken from
the above-said group in a piping system to
arrest pressure surges and shock, and to
dissipate the harmful energy associated with
the pressure surges and shock, so as to prevent
breakage of the system so that the flowing
medium of the system may at least partially
flow through the tubular form of the synthetic
elastomer.

20. The method of use according to Claim 19,
characterised in that said group further comprises
polyether elastomer in the durometer range of 70A Shore
to 95A Shore.

21. The method of use according to Claim 20,
characterised in that said step of inserting
comprises forming the tubular form of the chosen
elastomeric compound into a hollow interior with
open ends at each end of the tubular form, and
emplacing the tubular form in-line in the piping
system so that the flowing medium flows through
the entire length of the tubular form and in the
same general direction of flow as in the portions of the piping system to which the
tubular form is connected.

22. A method of using, according to Claim 19,
characterised in that said step of inserting
a tubular form in a piping system to arrest
pressure surges and shock, and to dissipate
the harmful energy associated therewith to
prevent breakdown of the piping system
comprises exposing the outer circumferential
surface area of the tubular form to non-
pressurized gas.

426

Polyurethane, ethylene-propylene-diene polymer,
ethylene/acrylic elastomer, carboxylated nitrile,
chlorosulfonated polyethylene, each having a
durometer hardness range of between 50A Shore and
95A Shore, inclusive; and polyester elastomer,
such as DuPont's "HYTREL," having a durometer
hardness range of between 7oA Shore and 95A Shore,
inclusive.  The inherent properties and characteristics
of each of these above-stated synthetic elastomers,
in combination with the hardness reading within the
range above-indicated, provides a flexible, stretchable, and strong core for the surge arrestor of the
present invention, such that the following is found:

    (a)   High tensile strength;

    (b)   High tensile modulus in lower
           extension percentages;

    (c)   High ultimate elongation;

    (d)   Low tensile set;

    (e)   Long flexural life;

    (f)   High dampening exhibited through
           hysterisis loss (conversion of dynamic
           energy to heat energy);

    (g)   Consistancy of physical properties
           over a wide temperature range and
           environmental conditions;

    (h)   High temperature resistance;

    (i)   Low temperature resistance;

    (j)   High chemical resistance;

    (k)   High abrasion resistance.

Material previously used in desurgers, surge arrestors,
and surge accumulators have not been sufficient to
withstand the pressure exerted on them without the
reinforcement provided by a pressurized gas, which
has also necessitated time-consuming, expensive and,
at times, hazardous installation procedures, and
has still not allowed for truly effective control and
absorption of pressure waves and shock waves.

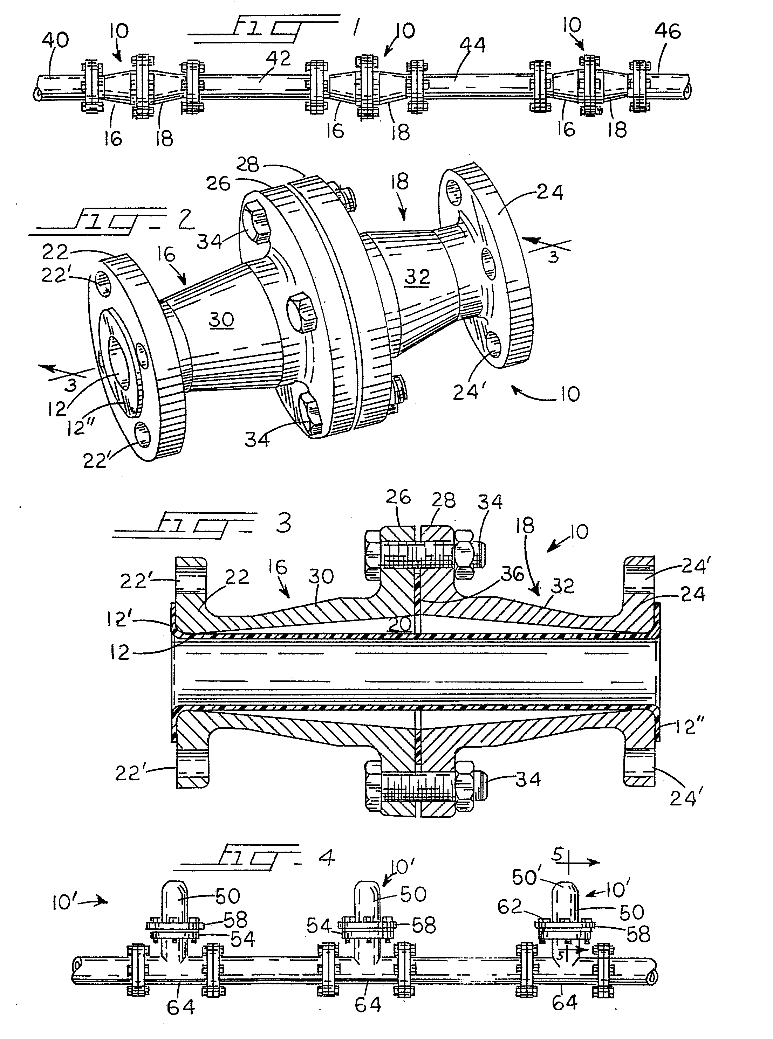

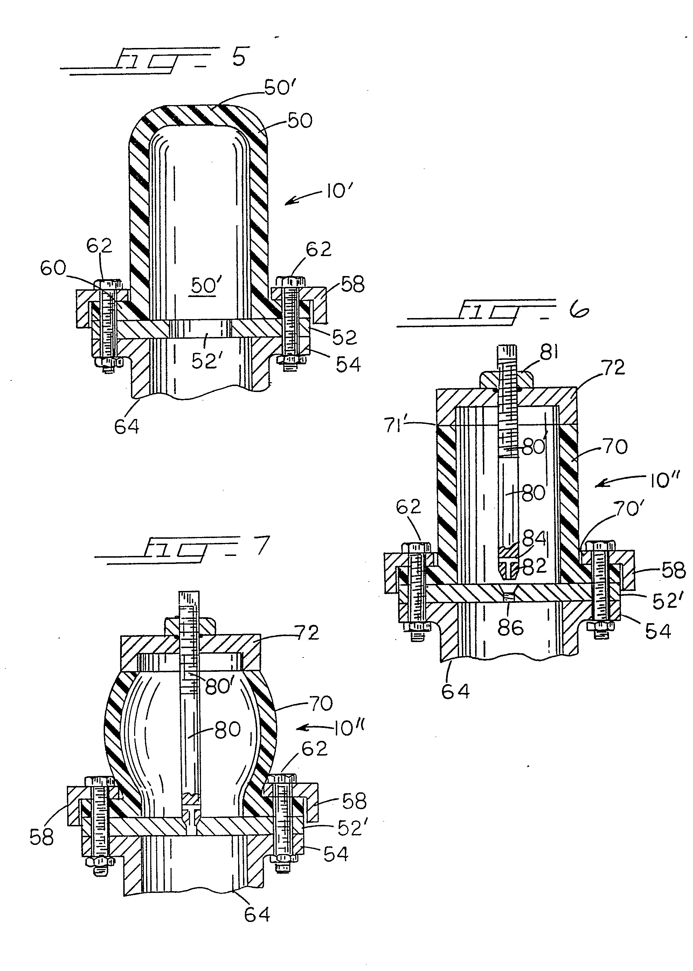

As can be seen in Figure 3, the circular cross-
section bladder or core 12 is hollow, so that the
flowing medium passes directly through the interior
of the core in a direction parallel to its longitudinal axis, so that when pressure surges or shock
waves occur, such are almost instantaneously
dissipated by the expansion of core 12. The surge
arrestor 10 is also provided with a pair of flange
reducers 16 and 18 for, firstly providing an
expansion chamber 20 for the core 12 and, secondly,
for mounting the surge arrestor between the ends of
pipes of a piping system, in a manner shown in
Figure 1. Each flange reducer 16 and 18 is provided
with a first circular end-flange 22 and 24, respectively, and a second circular end-flange 26 and
28, respectively, for connecting the two flange
reducers together thereby. The end-flanges 26 and
28 are of the same diametric extension, which is
greater than the diametric extension of each of the
circular end-flanges 22 and 24. The end flanges
of each flange reducer delimit the end portions of
the central casing 30 and 32, respectively, of each
flange reducer. Each central casing 30 and 32 is
substantially a frustro-conical-shaped shell defining a hollow interior in which is mounted half of the elastomeric core 12. The substantial frustro-conical shape to the casing shells 30 and 32 define a substantially frustro-conical-shaped chamber in which the elastomeric core is mounted, so that the portions of the elastomeric core nearer the center thereof are allowed to expand by a greater amount than the portions of the elastomeric core closer to the ends thereof.

As clearly shown in Figure 3, the two larger end-flanges 26 and 28 are affixed to each other by bolts 34 with gasket 36 providing the seal therebetween. Each of the smaller end-flanges 22 and 24 is provided with holes 22' and 24', respectively, for mounting the surge arrestor between the ends of pipes of a piping system, as shown in Figure 1. To achieve such connection between the ends of the pipes and the reduced ends of the flange reducers, the two end portions 12' and 12" of the elastomeric core are flanged to define a circular annular ring fixedly secured to the outer end surfaces of the smaller flange-ends of the flange reducers, in a manner clearly shown in Figure 3. Such securement of the annular ring portions to the flange-ends of the flange reducers may be achieved by any well-known adhesive bonding technique, mechanical attachment, and the like. These annular ring portions 12' and 12" thus serve as gaskets, the inherent properties of each of the materials noted above, of which the elastomeric core is made, also providing excellent fluid-sealing qualities.

Figure 1 shows three surge arrestors 10 mounted
along a piping system consisting of pipes 40, 42,
44 and 46.  These surge arrestors 10 are shown
equally spaced along the common longitudinal axis
of the pipes.  Such is the general rule in using
the surge arrestors of the present invention, such
being spaced equidistantly along the piping system.
The exact spacing between the surge arrestors is
determined by the size of the pipes employed, the
flowing medium being pumped through the piping
system, the diameter of the elastomeric core 12
used in the surge arrestor, and the pressures to
which the flowing medium are subject.  Surge
arrestor 10 will, also, necessarily be employed
directly adjacent to all valves and pumps, the main
sources of shock and pressure waves.  Surge arrestors
may also be employed adjacent to sharp turns and
bends in the piping system, as well, where pressure
differentials are marked.  Typically, the wall
thickness of the elastomeric core ranges between
1/8 inch to several inches.  The diameter of the
circular elastomeric core 12 is in the range of
between 1/2 inch for hydraulic systems to 72 inches
for very large-capacity systems.  Further, the type
of flowing medium flowing in the piping system generally is not critical to the use of the surge
arrestors of the present invention, in contradistinction to prior art devices.  The surge arrestor of the
present invention may be used in systems through
which flow: gases; water; water mixtures; oil; slurries;
sludges; semi-solid matter; and concrete materials.
Thus, the flowing medium could be slurried meat,
cheese, sand, stone, cement and water; and grout, such as that used to fill the holes which are bored
underground in tunnels during mining, and a host
of other media.  The elastomeric material from which
the core of the surge arrestor is made either has
ample inherent resistance to corrosion and wear from
any of the many types of flowing media flowing in
piping systems, or can be made to have such properties
by suitably-chosen additives, added thereto in the
well-known manner.  Any type of flowing medium may
pass through the surge arrestor with the assurance
that the surge arrestor will not be damaged thereby.
Further, to enhance the resistance to any aggressive
material flowing in the piping system, the surge
arrestor of the present invention may be provided
with another inner tubular core of rubber, properly
treated and formulated to withstand the attack,
and/or corrosion caused by the flowing medium in
the piping system.  This inner tubular rubber core
constitutes a protective barrier for the outer,
elastomeric core, the two cores being bonded to each
other by well-known adhesive techniques.  In the case
of the use of an inner rubber protective core, the
annular end-rings 12; and 12" are also overlaid with
similar annular end-rings of the inner rubber core,
or in the alternative, the outer elastomeric core's
annular rings may be eliminated altogether, with
only the inner rubber annular rings being used as
gaskets for the flange-reducer ends 22 and 24.

The preferred embodiment of Figures 1-3, as mentioned
above, is for "in-line" connection of the surge arrestor
to the piping system, so that the flowing medium passes entirely through the elastomeric core in substantially
the same direction as it flows through the portions of
the piping system to which the surge arrestor is
connected. This provides almost instantaneous
reaction to shock and pressure waves in the system,
as well as obviating secondary pressure and shock
waves produced by the "off-line," transversely mounted
surge arrestor embodiment of the present invention.
The "off-line" surge arrestor 10' is shown in
Figure 5, and includes an elastomeric, hollow,
tubular element 50 made of one of the synthetic
elastomers of the group given above, within the same
hardness range thereof. The element 50 has a closed
end 50' and an open end 50" oppositely disposed
relative to the closed end 50', so that the flowing
medium may enter through the open end and expand,
or inflate, the elastomeric element 50 during pressure
waves or shock waves. The surge arrestor 10' also has
a metallic mounting plate 52 having a central aperture
52' through which the flowing medium passes into the
interior of the elastomeric element 50. The metallic
mounting plate 52 is mountable to a flange connector
54 of a T-connector 64 of the piping system for
connecting the elastomeric element 50 at right angles
to the longitudinal axis of the pipe to which it is
to be connected. The elastomeric element 50 also has
an annular ring portion 60 for mounting the elastomeric element 50 to the plate 52 and, thus, to the
pipe via flange connector 54. The annular ring
portion 60 is secured between the plate 52 and a metal
ring 58 by bolts 62, as clearly shown in Figure 5.
The bolts 62 pass through a plurality of aligned
openings in the metal ring 58, in the annular ring
portion 60, the metal plate 52, and, finally, the flange connector 54, thus securing the entire surge
arrestor to a portion of the piping system in a
transverse fashion, as shown in Figure 4.

In Figure 4, there are shown three such "off-line"
surge arrestors 10' connected along piping via a
plurality of T-connectors 64. Each T-connector 64
has a flange connector 54 for connecting the surge
arrestor 10' thereto. The surge arrestors 10' are
spaced at equal intervals along the pipes, the
distance being dependent upon the flowing medium,
the pressures in the system, the size of the
system's piping, harmonics, and the like. As in the
first preferred embodiment, such surge arrestors
10' are also provided directly adjacent to valves
and pumps. In each of the two embodiments thus
far described, the outer surface area of the surge
arrestors 10 and 10' is subject to non-pressurized
air.

A modification of the second embodiment of the surge
arrestor 10' is shown in that it is also mountable
"off-line" to the pipes, utilizing the same connecting
structure as shown in Figure 5, including the flange
connector 54 of the T-connector 64, and the metal ring
58. The surge arrestor 10" has an elastomeric element
70 made of the same material as that of the surge
arrestors 10 and 10'. The elastomeric element 70,
however, has two open ends 71 and 71', with the
end 71' being closed off and sealed by a metal cap 72.
The end 71' is suitably secured to the metal cap 72 by
well-known adhesive techniques, to thus form a
continuous housing defining an interior hollow chamber·

for the influx of flowing medium, to thus serve,
as the surge arrestor 10', as a surge accumulator.
The metal cap 72 is provided with a central
aperture through which extends a valve stem 80 having
a threaded portion 80' for mounting the valve stem
to the metal cap via a nut 81, as clearly shown in
Figure 6. The valve stem 80 has a tip portion 82
in which is formed a T-shaped passageway 84 for
allowing fluid connection, when the valve stem is
in a sealing position, between the interior of the
hollow chamber of the surge arrestor 10" and the
interior of the T-connector 64, for the reasons to
be described below. A metal plate 52', similar
to metal plate 52 of the surge arrestor 10', is
provided, which metal plate 52' has an opening
defining a valve seat 86 for the valve stem tip 82,
as clearly shown in Figures 6 and 7. The valve
stem 80 serves to close off any influx of flowing
medium into the hollow chamber of the surge arrestor
after the elastomeric element has expanded to a predetermined point, which ensures continuous duty cycle
and liberal safety factors. Thus, the valve stem
serves as a safety feature, to prevent overload of
the elastomeric element. The threaded portion 80'
of the valve stem allows for selected manual extension
and retraction of the valve stem, to tailor the surge
arrestor to the conditions under which the system will
operate, and the forces and surges to which the surge
arrestor 10" will be exposed.

Figure 6 shows the surge arrestor 10" in its non-
expanded, relaxed condition, when no pressure wave or
shock wave has impacted thereon. In this state, valve stem tip 82 is spaced from the seat 86 so that fluid connection is allowed between the hollow interior chamber of the surge arrestor 10" and the interior of the T-connector 64, so that when a shock wave or pressure wave is created in the system, as by sudden shut-down thereof, the overpressures will be directed to the surge arrestors and absorbed thereby. Figure 7 shows the surge arrestor 10" in its fully expanded condition, when the maximum allowable influx of flowing medium has been reached. As the elastomeric element 70 expands, it shrinks in longitudinal length, such that its end 71' draws closer to the end 71 thereof. This, in turn, causes the metal cap 72 to approach closer to the seat 86, until, at the critical point, the valve stem tip 82 is forced into seating and sealing engagement with the valve seat opening 86, at which point no further influx of flowing medium is possible. During this sealed state, passageway 84 permits the medium within the chamber of the surge arrestor 10" to flow back into the system slowly, so as to return the surge arrestor 10" to its original, non-expanded state shown in Figure 6. This slow return of the medium to the system also helps to prevent additional shock or pressure waves from accumulating via the feedback from the surge arrestors themselves. The passageway 84 also serves to help equalize the pressure on either side of opening 86, so that the closing of the valve stem tip does not by itself create pressure waves and shock waves, as occurs with the closing of any valve in the piping system. Further, resonance is effectively eliminated.

While specific embodiments of the invention have
been shown and described, it is to be understood
that numerous changes, modifications, and
additions may be made thereto without departing
from the scope, breadth, and intent of the invention.

The features disclosed in the foregoing description,
in the claims and/or in the accompanying drawings
may, both separately and in any combination thereof,
be material for realising the invention in diverse
forms thereof.

426

CLAIMS

1. A surge arrestor for use in pipes, fluid systems, and the like, characterised by:

an elongated tubular elastomeric element (12;50) which defines a hollow interior for the gas, liquid or sludge flowing through the pipes, fluid systems, and the like, said hollow interior being bounded by the inner surface area of said elongated tubular elastomeric element, and having at least one open inlet end;

means fixedly connected to said elongated tubular elastomeric element (12;50) for fixedly mounting said elongated tubular elastomeric element to a portion of the piping system in which it is to be utilized to control pressure surges, such that at least a portion of the liquid or sludge in the piping system flows in said hollow interior;

said means for fixedly mounting said elongated tubular elastomeric element to a portion of the piping system being connected adjacent to at least one said open end of said tubular elastomeric element for mounting said one open end in fluid

426

communication with the gas, liquid or sludge
in the piping system in which said elongated
tubular elastomeric element is to be used,
so that at least a portion flows therethrough;

said means further mounting said elongated
tubular elastomeric element for expansion
and contraction thereof to dissipate the
pressure surges in the piping system, and
also mounting said tubular elastomeric element
such that said means for fixedly mounting does
not contact the outer surface of said elongated
tubular elastomeric element for most of the
length thereof to allow free expansion thereof:

said element having an outer surface
substantially in contact with non-pressurized gas;

2.  The surge arrestor according to Claim 1,
characterised in that said elongated tubular
elastomeric element (12) is mounted in-line to
the piping system, said tubular element having a
first open end constituting said inlet end, and
a second open outlet end spaced from said first
open end; said first and second open ends
connecting one end of a pipe of the piping system
to one end of another pipe of the piping system
so that the gas, liquid or sludge flowing through
the piping system flows through the entire length
of said tubular element along the longitudinal
axial direction of said tubular elastomeric
element.

3. The surge arrestor according to Claim 2,
characterised in that said means for fixedly
mounting comprises connecting housing means
having a hollow interior in which is mounted
said elastomeric element (12), said connecting
housing means having a first end fixedly
connected to said first open end of said elastomeric element, and a second end fixedly connected
to said second open end of said elastomeric element;

each of said first and second ends of said
connecting housing means being mountable to an
end of a respective pipe of the piping system in
which said elastomeric element is to be used, so
that said element is mounted in-line with the
system.

4. The surge arrestor according to Claim 3,
characterised in that said hollow interior of
said connecting housing means concentrically
surrounds said outer surface of said elastomeric
element (12) to define an expansion volume between
the inner surface area of said connecting housing
means and said outer surface of said elastomeric
element, whereby said elastomeric element is free
to expand and contract in response to pressure
changes of the medium flowing therethrough; said
expansion volume being filled with said non-
pressurized gas.

5. The surge arrestor according to Claim 4,
characterised in that said connecting housing means
comprises a first flange-reducer and a second flange reducer, each of said flange-reducers being affixed to a respective end of a pipe of the piping system in which said elastomeric element (12) is to be used; said flange-reducers comprising cooperating means for interconnecting said flange-reducers at the end of each remote from the end of the pipe to which it is affixed.

6. The surge arrestor according to Claim 4, characterised in that said elastomeric element (12) comprises a first flanged portion at said first open inlet end thereof, and a second flanged portion at said second outlet end thereof, each of said first and second flanged portions being fixedly attached to said connecting housing means at a respective one of said first and second ends thereof, thereby providing gaskets for the mounting of said connecting means to the ends of the pipes between which it is connected;

said first and second flanged portions being formed of the same material as the rest of said elastomeric element and is formed integral therewith.

7. The surge arrestor according to Claim 5, characterized in that each of said flange-reducers defines a frustro-conical hollow interior in which is positioned a portion of said elastomeric element (12); said flange-reducers combining to form said expansion volume about said outer surface of said element;

said expansion volume being defined by the annular region between the inner surface areas of said flange-reducers and the outer surface area of said elastomeric element.

8. The surge arrestor according to any of the preceding claims, characterised in that said elastomeric element (12;50) is made of a material chosen from one of the following group: polyurethane, ethylene-propylene-diene polymer, ethylene/acrylic elastomer, carboxylated nitrile, chlorosulfonated polyethylene; each having a durometer reading between 50A Shore and 95A Shore, inclusive.

9. The surge arrestor according to Claim 8, characterised in that said group further comprises polyester elastomer having a durometer reading between 70A Shore and 95A Shore.

10. The surge arrestor according to Claim 1, characterised in that said elastomeric element (50) is mounted off-line to the piping system, such that the flowing medium flowing in the piping system must enter said at least one open inlet end at an angle relative to the longitudinal axis of the pipe to which said element is connected; said elastomeric element having one opening constituting said open inlet end; said element defining an accumulating expandable volume; said element further having an outer surface area in substantial communication with non-pressurized ambient gas;

said element being entirely closed off except for said open inlet end to define a second closed end remote from said open inlet end.

11. The surge arrestor according to Claim 10, further comprising means for automatically and substantially sealing off said one opening of said element when said elastomeric element (50) is expanded to a predetermined capacity in said expansion volume.

12. The surge arrestor according to Claim 11, further characterised in that said means for automatically and substantially sealing comprises at least one passageway having a first open end in fluid communication with the interior of said elastomeric element (50) and a second open end in fluid communication with the flowing medium in the piping system to which said elastomeric element is connected, so that when said means for automatically and substantially sealing seals off said one opening of said elastomeric element, the flowing medium in the interior of said elastomeric element is allowed to flow back into the system at a reduced rate, to prevent overloading of said element and to further help reduce secondary pressure surges caused by the closing of said opening.

13. The surge arrestor according to Claim 12, characterised in that said means for automatically and substantially sealing comprises a valve stem having a first end facing toward and adjacent to, during non-sealing positions, said one opening of said elastomeric element (50), and a second end connected to said second closed end of said elastomeric element (50); said second closed end of said elastomeric element (50) being made of a serves as a volume-expansion chamber in which the elastomeric tube may expand during pressure surges and shock waves. The ends of the elastomeric tube are flanged for securement to the ends of the flange-reducers mounted to the piping system, which thus, provide gaskets for the flange-reducer connections with the ends of the pipes of the piping system. The interior of each flange-reducer is frustro-conical in shape, so that when the two flange-reducers mate for mounting the elastomeric tube, the middle portions of the tube are allowed to expand more than the distal ends thereof.

In a second embodiment of the invention, the elastomeric tube, made of one or a combination of the materials in the above-named group, is connected off-line to the system, as is currently and prevalently done by conventional and well-known surge arrestors and accumulators. In this embodiment, the tube of elastomeric material has only one open end, with the second end being closed off. The open end is connected to the piping system for fluid communication, so that the tube is at right angles to the longitudinal axis of the pipe or pipes to which it is connected. In this embodiment, the tube acts more as an accumulator. The tube is formed with an annular ring adjacent the open end thereof, which annular ring acts as a gasket for a pair of metal flanged rings used to mount the surge arrestor to a pipe or pipes of a piping system. As in the first embodiment, the outer circumferential surface area of the elastomeric tube is exposed to non-pressurized air or the like. The pair of metal flanged rings attach to a mounting flange that connects directly to a pipe or pipes of the system.

This mounting flange is provided with a central opening that overlies the open end of the tube, so as to provide a passageway for the flow of the flowing medium in the piping system.

In a modification of the second embodiment of the invention, the elastomeric tube, made from one or a combination of the materials from the group above-named, is provided with a valve stem for sealing off most of the flow of the flowing medium into the tube after the tube has expanded to a predetermined volume. The valve stem is connected to the closed end of the tube, which closed end, in this modification of the second embodiment, is made of metal joined to the rest of the tube of elastomeric material. The tip of the valve stem is aligned with a valve seat formed in the mounting flange, so that, when the tube is filled with flowing medium from the piping system during a pressure surge or shock wave, it is urged toward the valve seat for seating engagement therewith, due to the movement of the closed metal end of the tube because of the expansion of the tube during the surge.

The tip of the valve stem is provided with a passageway having one end in fluid communication with the piping system, and a second end in fluid communication with the piping system, and a second end in fluid communication with the interior of the elastomeric tube. This passageway allows for the medium within the tube during pressure surges and shock waves to slowly feed back into the piping system after the valve stem has closed off
further entry of the medium into the tube interior.
This slow-feeding gradually decreases the volume
of the tube, until it returns to its original size
for subsequent use, and also helps to prevent
further pressure surge or shock waves in the system
by not closing off suddenly.

The surge arrestor of the invention may be used in
piping systems in which flow media such as liquids,
semi-solids, slurries, gases, and sludges.

The invention will be more readily understood with
reference to the accompanying drawing, wherein;

Figure 1 is a schematic view showing the preferred
embodiment of the surge arrestor of the present
invention where a plurality of the surge arrestors
are mounted "in-line" in a piping system for absorbing
dangerous and harmful shock waves and overpressures;

Figure 2 is a perspective view showing the preferred
embodiment of the surge arrestor of the present
invention which is mounted "in-line" in the piping
system, as shown in Figure 1;

Figure 3 is a cross-sectional view taken along line
3-3 of Figure 2;

Figure 4 is a schematic view of the second embodiment
of the surge arrestor of the present invention, which
is mounted "off-line," i.e. at right angles, to the
flow of flowing medium in the piping system for flowing medium in the piping system for absorbing
dangerous and harmful shock waves and overpressures;

Figure 5 is a cross-sectional view taken along
line 5-5 of Figure 4;

Figure 6 is a corss-sectional view similar to
Figure 5 showing a modification of the surge arrestor
of Figure 5, in which a valve stem is provided in the
interior of the surge arrestor to seal off further
influx of flowing medium after the surge arrestor has
expanded to a predetermined volume, in order to prevent
excessive expansion, and therefore breakage, of the
walls of the surge arrestor during shock waves and
overpressures; and

Figure 7 is a cross-sectional view similar to Figure 6
showing the surge arrestor of Figure 6 in its outward-
most expansion phase during a shock wave or pressure
wave, with the tip of the valve stem having been
brought into seating engagement with a seat to seal
off the inflow of flowing medium to the interior of
the surge arrestor.

Referring now to the drawing in greater detail, Figures
1-3 show the preferred embodiment of the surge arrestor
of the present invention.  The surge arrestor 10 is
mounted "in-line" in a piping system that is to be
protected against pressure and shock waves, or spikes.
The surge arrestor 10 has a hollow, tubular core or
bladder 12, shown in Figure 3, which core is made from
one of the following group of synthetic elastomers:

FIG. 1

FIG. 2

FIG. 3

FIG. 4

_FIG_ 5

_FIG_ 6

_FIG_ 7

European Patent
Office

**EUROPEAN SEARCH REPORT**

0193077
Application number

EP 86 10 2038

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-1 775 217 (RHEINISCHE METALLWERK GmbH) * Figures 1,2; page 2, lines 5-22; page 5, line 6 - the end * | 1-4 | F 16 L 55/04 |
| A | | 5-7,16,18,19,21,22 | |
| X | FR-A-1 149 443 (W. JORDAN) * Figures 1-3; abstract * | 1-4,10 | |
| A | | 5-7,16,18,19,21,22 | |
| X | US-A-3 473 565 (L. BLENDERMANN) * Figures; claims * | 1-4,10,16,18,19,21,22 | TECHNICAL FIELDS SEARCHED (Int. Cl.4) F 16 L F 16 J |
| X | FR-A- 782 888 (KULA FRERES) * Figure; abstract * | 1-4 | |
| A | | 16,18,19,21,22 | |

-/-

The present search report has been drawn up for all claims

| Place of search | Date of completion of the search | Examiner |
|---|---|---|
| THE HAGUE | 30-05-1986 | NARMINIO A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

| Category | Citation of document with indication, where appropriate, of relevant passages | Relevant to claim | CLASSIFICATION OF THE APPLICATION (Int. Cl.4) |
|---|---|---|---|
| **DOCUMENTS CONSIDERED TO BE RELEVANT** | | | Page 2 |
| X | US-A-2 838 073 (DI MATTIA et al.)<br>* Figures 1,2,5-7; claim * | 1-4 | |
| A | | 5-7,16<br>,18,19<br>,21,22 | |
| | --- | | |
| A | DE-C- 683 936 (O. BEECK)<br>* Figures 1-3; page 1, line 49 - page 2, line 30 * | 11,12 | |
| | --- | | |
| A | US-A-2 388 097 (R.J. TURNER)<br>* Figure 1; page 1, right-hand column, lines 39-46 * | 8,16,<br>19 | |
| | ----- | | TECHNICAL FIELDS SEARCHED (Int. Cl.4) |

The present search report has been drawn up for all claims

| Place of search | Date of completion of the search | Examiner |
|---|---|---|
| THE HAGUE | 30-05-1986 | NARMINIO A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82